# EUROPÄISCHE PATENTSCHRIFT

(11) **EP 1 281 253 B1**
(45) Veröffentlichungstag und Bekanntmachung des Hinweises auf die Patenterteilung: **12.07.2006**
(21) Anmeldenummer: 01940215.5
(22) Anmeldetag: 08.05.2001
(51) Int. Cl.: H04L 1/18, H04L 1/00

(54) **ÜBERTRAGUNG VON KODIERTEN DATENPAKETEN, BEI DER DER EMPFÄNGER DURCH EXPLIZITE SIGNALISIERUNG DIE KODIERUNG DER DATENPAKETE ENTSCHEIDET**
TRANSMISSION OF ENCODED DATA PACKETS WITH DETERMINATION OF THE CODING THROUGH EXPLICIT SIGNALLING BY THE RECEIVER
TRANSMISSION DE PAQUETS DE DONNEES CODES, LE RECEPTEUR SELECTIONNANT LE CODAGE DES PAQUETS DE DONNEES PAR SIGNALISATION EXPLICITE

(30) Priorität: 08.05.2000 DE 10022270
(43) Veröffentlichungstag der Anmeldung: 05.02.2003
(73) Patentinhaber: SIEMENS AKTIENGESELLSCHAFT, 80333 München (DE)
(72) Erfinder: GRUHN, Thomas, 12109 Berlin (DE); MECKLENBRÄUKER, Christoph, A-1220 Wien (AT); RAJI, Fariba, 10625 Berlin (DE); WEGNER, Frank, 13407 Berlin (DE)
(86) Internationale Anmeldenummer: PCT/DE2001/001743
(87) Internationale Veröffentlichungsnummer: WO 2001/086857

(56) Entgegenhaltungen:
- EP-A- 0 797 327
- WO-A-00/49760
- DE-A- 19 856 085
- FURUSKÄR A ET AL: "EDGE - ENHANCED DATA RATES FOR GSM AND TDMA/136 EVOLUTION" ERICSSON REVIEW, ERICSSON. STOCKHOLM, SE, Bd. 1, 1999, Seiten 28-37, XP000802524 ISSN: 0014-0171
- KALLEL S: "EFFICIENT HYBRID ARQ PROTOCOLS WITH ADAPTIVE FORWARD ERROR CORRECTION" IEEE TRANSACTIONS ON COMMUNICATIONS, IEEE INC. NEW YORK, US, Bd. 42, Nr. 2/3/4, 1. Februar 1994 (1994-02-01), Seiten 281-289, XP000445942 ISSN: 0090-6778

## Beschreibung

Die Erfindung betrifft ein Verfahren zum Übertragen von kodierten Datenpaketen in einem Funk-Kommunikationssystem sowie ein entsprechendes Funk-Kommunikationssystem.

In Funk-Kommunikationssystemen werden Nachrichten und Informationen (beispielsweise Sprache, Bildinformationen oder andere Daten) mit Hilfe von elektromagnetischen Wellen über eine Funkschnittstelle zwischen sendender und empfangender Station (Basisstation bzw. Teilnehmerstation) übertragen.

In bestehende Mobilfunknetze nach dem GSM-Standard (GSM: Global System for Mobile Communication) werden derzeit neuartige Datendienste wie ein Paketdatendienst GPRS (General Packet Radio Service) eingeführt. Auch Kommunikationssysteme der dritten Generation - z.B. das UMTS (Universal Mobile Telecommunication System) unter dem UTRA-Standard (UTRA: Universal Terrestrial Radio Access) - sehen den Versand von Paketdateneinheiten (PDUs) vor. Diese Paketdateneinheiten werden durch Segmentierung und durch Hinzufügung weiterer Kontrollinformationen aus großen Datenpaketen höherer Schichten bzw. Systemebenen (z.B. Layer 3) abgeleitet. Insbesondere erfolgt die Übertragung von Paketdaten asynchron bzw. nicht synchron, wodurch die Übertragungsdauern und/oder die Übertragungswege einzelner nacheinander gesendeter Paketdateneinheiten zueinander verschieden sein können. Zur Identifizierung der beim Empfänger eintreffenden Paketdateneinheiten können diese mit einer Identifizierungsnummer oder Sequenz-Nummer für die zugrundeliegenden Daten (SN#i) versehen werden.

Bei Paketdatenübertragung ist die korrekte Übertragung einzelner Datenpakete sehr wichtig, da die Pakete später häufig zu großen Blöcken zusammengesetzt werden, deren Richtigkeit auf einer höheren Verwaltungsebene erneut überprüft werden. Fehlt ein Paket oder ist ein Paket fehlerhaft, muss der große Block von dieser höheren Verwaltungsebene gänzlich neu angefordert werden.

Da bei der Übertragung der Paketdateneinheiten in einer Vielzahl von Situationen Datenverluste vorkommen können, sind Verfahren zur Datenensicherung übertragener Daten bekannt. Dazu zählen insbesondere auch Kodierungsverfahren und Wiederholungsverfahren, z.B. ein automatisches Datenwiederholungsverfahren mit kombinierbarer Kodierung zur Vorwärts-Fehlerkorrektur FEC (Forward Error Correction) unter der Kurzbezeichnung Hybrid ARQ Type II (ARQ: Automatic Repeat Request), das nach einer ersten mißglückten Datenübertragung einer 1. Kodierungseinheit weitere ergänzende Kodierungseinheiten (2. Kodierungseinheit, 3. Kodierungseinheit,...) als Wiederholung (Retransmission) hinterhersendet. Dabei steigt in der Regel die Redundanz von Wiederholung zu Wiederholung an und entsprechend steigt die Wahrscheinlichkeit, dass die Datenpakete auf der Empfangsseite korrekt rekonstruiert werden können.

In der EP 0 797 327 A2 werden adaptive hybride ARQ-Verfahren beschrieben, bei denen die vom Sender ausgewählte Kodierrate entweder von der Häufigkeit der vom Sender empfangenen NACK-Signale oder von der Anzahl der Fehler in der zuletzt vom Empfänger empfangenen Kodiereinheit abhängt. Die Anzahl der Fehler überträgt der Empfänger dabei zusammen mit einem NACK-Signal an den Sender.

Üblicherweise gibt es eine Maximalzahl n an unterschiedlichen Kodierungseinheiten pro Datenpaket. Nach Erreichen der maximal vorgesehenen Redundanz, d.h. nach Übertragung der n. Kodierungseinheit, kann die Versendung einer bereits gesendeten Kodierungseinheit seitens des Senders wiederholt werden. Das Empfangssignal der erneuten Übertragung (Retransmission) kann mit dem empfangenen Signal der Erstverschickung zum Beispiel mit maximum ratio combining (Wiederkombinierung im maximal möglichen Verhältnis) kombiniert werden.

Während die 1. Kodierungseinheit beispielsweise aus den unveränderten oder nur geringfügig kodierten Daten besteht, sind die Daten in den später übermittelten (2., 3.) Kodierungseinheiten eines Datenpaketes stärker kodiert. Da bei diesen Verfahren die Redundanz mit ansteigender Kodierung erhöht wird, werden in der Regel einige Informationsbit ausgespart, so dass die 2.,3. oder n. Kodierungseinheit in einigen Fällen nicht alleine ausreicht, um die ursprünglichen Daten zu rekonstruieren.

Bei einigen Verfahren, z.B. Hybrid ARQ Type II, muss der Empfänger wissen, um welche Kodierungseinheit es sich handelt, um die entsprechende Dekodierung durchführen zu können. Bei synchroner Übertragung kann man zu diesem Zweck die Zuordnung der verschiedenen Wiederholungen durch eine zeitliche Abfolge der Empfangszeitpunkte rekonstruieren.

Es kann nun passieren, dass entweder die Kodierungseinheiten oder eine positive oder negative Empfangsbestätigung über eine erfolgreiche Rekonstruktion der Datenpakete (ACK bzw. NACK) bei der Übertragung verloren gehen.

In einigen Systemen wird auch nur eine positive Empfangsbestätigung (ACK) versendet. In diesen Systemen kann in der Empfangsbestätigung zwischen nicht empfangen, nicht gesendeten oder fehlerhaft übertragen Datenpaketen nicht unterschieden werden. Eine Interpretation einer negativen Empfangsbestätigung kann jedoch trotzdem durchgeführt werden. Zum Beispiel kann ein Fehlen der Empfangsbestätigung für eine Dateneinheit Nr.X bei Vorhandensein der Empfangsbestätigung von Dateneinheit Nr.X-1 und Dateneinheit Nr.X+1 auf eine negative Empfangsbestätigung (NACK) für Dateneinheit Nr.X schließen lassen. Bei nicht synchroner Paketdatenübertragung, kann allgemein nicht genau festgelegt werden, zu welchem Zeitpunkt Datenpakete oder Signalisierungsinformationen übertragen werden bzw. empfangene Daten übertragen wurden. Es besteht außerdem allgemein die Möglichkeit, dass ein Signal so stark gestört wird, dass der Empfänger keinerlei Kenntnis von dem Übertragungsversuch bekommt oder er dem empfangenen Signal keinerlei Informationen entnehmen kann.

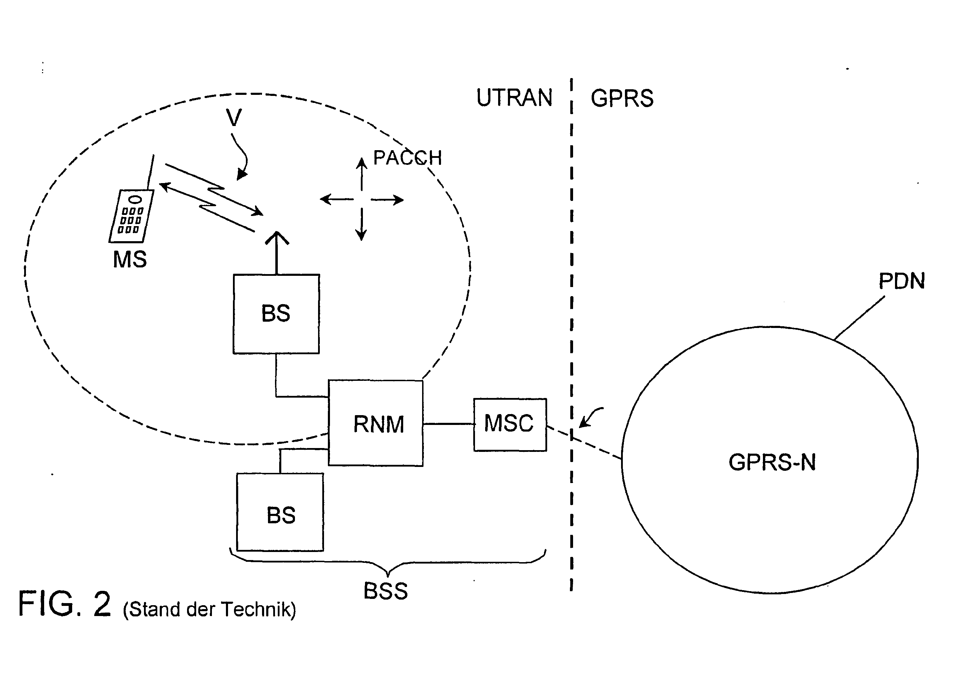

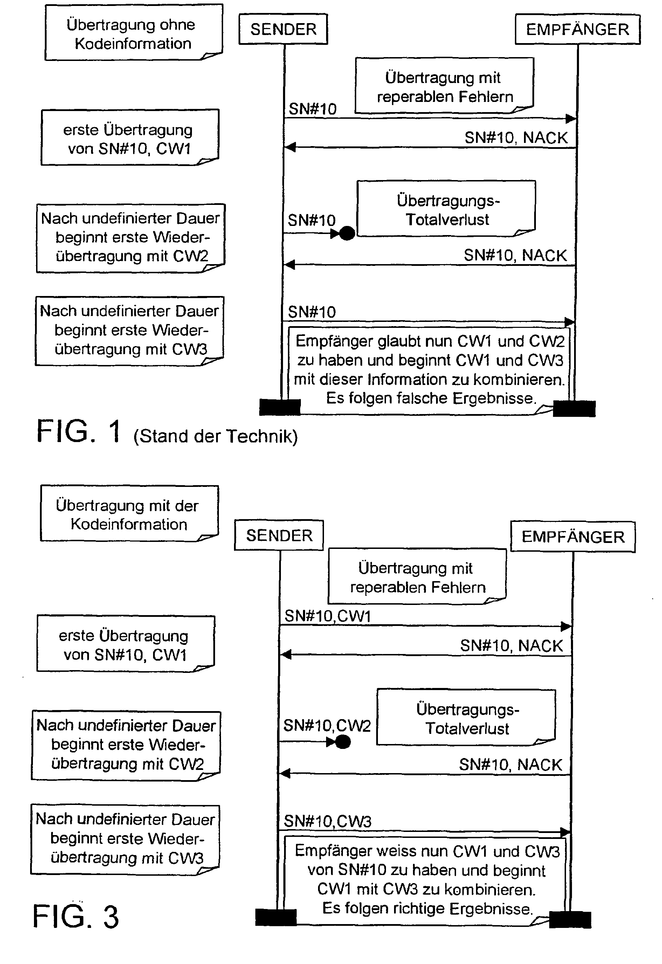

In Fig. 1 sind beispielhafte Fälle skizziert, bei denen es zu Problemen beim Rekombinieren der ursprünglichen Daten kommen kann und bei denen dem Empfänger die Kenntnis des zugeordneten Kodes fehlt. Treten bei einer ersten Übertragung eines Datenpakets mit der Sequenznummer 10 (SN#10) bzw. dessen 1. Kodierungseinheit (SQ#10, CW1) z.B. Fehler auf, die reparierbar sind, so kann der Empfänger dem Sender eine negative Empfangsbestätigung (NACK) des (fehlerhaften) Empfangs bzw. des misslungenen Decodierungsversuchs übermitteln. Wird die darauf durchgeführte Übertragung einer nachfolgenden Kodierungseinheit, z.B. der 2. Kodierungseinheit (SQ#10, CW2) dieses Datenpaketes (SN#10) so stark gestört, dass der Empfänger nicht erfährt, dass er eine Kodierungseinheit nicht empfangen hat, so wird er nach einer Anforderung durch den Sender oder spontan nach Ablauf eines vorgegebenen Zeitintervalls eine Neuverschickung des Datenpaketes anfordern. Dabei teilt der Empfänger dem Sender durch ein negatives Bestätigungssignal bzw. eine negative Empfangsbestätigung (NACK) oder auch durch Ausbleiben einer positven Empfangsbestätigung lediglich mit, dass eine erneute Versendung der Daten des Datenpaketes (SN#10) erfolgen soll. Das Auslösen dieser Empfangsbestätigung kann nach allgemein bekannten Verfahren hervorgerufen werden, z.B. Versenden einer Bitliste für mehrere Datenpakete, regelmäßiges Aussenden, Verfahren mit Zeitgebern oder durch Rückschlüsse von erfolgreichen Übertragungen.

Ein Beispiel ist eine Bitliste zur Empfangsbestätigung mit einem Startwert=SN#1, einer Folge=10111111101 , wobei 1 ACK bedeutet und auf eine positive Empfangsbestätigung hinweist, 0 NACK oder keine Information über die Aussendung bedeutet und somit auf eine negative Empfangsbestätigung für das entsprechende Datenpaket hinweist. Wenn dabei der Wert SN#9=1, der Wert SN#11=1 der Wert SN#10=0 ist, kann der Sender eine negative Empfangsbestätigung NACK für den Wert SN#10 interpretieren. Der Sender erkennt nicht, dass der Empfänger die Kodierungseinheit SN#10,CW2 nicht empfangen hat. Er kann nur erkennen, daß das Datenpaket SN#10 noch nicht erfolgreich übertragen wurde, was für eine erfolgreiche Decodierung notwendig ist. Er sendet somit unter der Annahme des lediglich fehlerhaften Empfangs der 2. Kodierungseinheit (SN#10, CW2) die 3. Kodierungseinheit (SN#10, CW3). Der Empfänger hingegen erkennt nicht, ob nun die 2. Kodierungseinheit mit Verzögerung geschickt wurde oder aufgrund der letzten Negativ-Quittierung (NACK) die 3. Kodierungseinheit gesandt wurde. Entsprechend kombiniert er die 1. und die 3. Kodierungseinheit so als ob er die 1. und die 2. Kodierungseinheit empfangen hätte. Folglich wird das entsprechende Datenpaket in solchen Fällen falsch rekonstruiert.

Diese beispielhafte Behandlung der Daten erfolgt somit wie bei einer synchronen Übertragung oder wie wenn der Übertragungsablauf nachvollziehbar erkennbar ist, also bekannt ist, welche Kodierungseinheit gesendet wurde. In Systemen mit synchroner Übertragung erfolgt die Quittierung (ACK oder NACK) der erfolgreich oder erfolglos empfangenen Datenpakete dabei unmittelbar nach Erhalt der Daten. Die Retransmission der neuen Kodierungseinheit eines Datenpaketes ist dann folglich die erste Sendung, die der Empfänger nach dem Versenden der negativen Empfangsbestätigung (NACK) für die fehlerhaft übertragene Kodierungseinheit erhält.

Im Paketdatendienst GPRS gibt es die Möglichkeit, die Kodierung während der Übertragung zu erhöhen. Diese Erhöhung wird in einem dafür verwendbaren Nachrichtenkanal (PACCH, Fig. 2) angekündigt und gilt dann für eine vorbestimmbare Zeit (z.B. 100 ms; 10 Datenübertragungsblöcke). Es ist geplant, in einer weiteren Ausbaustufe die Möglichkeit zu schaffen, dass auch einzelne Datenblöcke besser kodiert werden können. Ein Verfahren zur geeigneten Lösung insbesondere des vorstehend beschriebenen Problems fehlt aber noch.

Ein weiterer Lösungsansatz besteht im Einsatz geeigneter Zeitgeber, wobei eine Maximalzeitdauer festzulegen wäre, nach der ein Übertragungsversuch stattgefunden haben müßte. Diese Methode wäre jedoch insbesondere mit unnötigen Wartezeiten verbunden.

Die Aufgabe der Erfindung besteht darin, ein Verfahren und ein Funk-Kommunikationssystem zum Übertragen von kodierten Paketdateneinheiten bzw. Datenpaketen in einem Funk-Kommunikationssystem bereitzustellen, bei dem die Rekonstruierbarkeit der ursprünglichen Daten verbesserbar und beschleunigbar ist.

Diese Aufgabe wird durch das Verfahren mit den Merkmalen des Patentanspruchs 1 bzw. das Kommunikationssystem gemäß den Merkmalen des Patentanspruchs 10 gelöst.

Vorteilhafte Ausgestaltungen sind Gegenstand von abhängigen Ansprüchen.

Die Erfindung sieht vor, dass der Empfänger dem Sender explizit eine bestimmte Kodierungseinheit eines Datenpaketes signalisiert, die der Sender an den Empfänger übertragen soll. Hierdurch wird die Entscheidung, welche Kodierungseinheit vom Sender zu übertragen ist, vom Sender auf den Empfänger verlagert. Letzterer kann somit abhängig von seinen Bedürfnissen zielgerichteter die für eine Rekonstruktion der Datenpakete notwendigen Kodierungseinheiten anfordern. Insbesondere betrifft dies die Fälle der Anforderungen von Retransmissions. Somit kann die Anzahl der insgesamt zu übertragenden Kodierungseinheiten reduziert werden.

Dadurch, dass nach einer Weiterbildung der Erfindung mit den Kodierungseinheiten eine Information über den entsprechenden Kode zum Empfänger übertragen wird, kann dieser direkt erkennen, welcher Kode für die Dekodierung zu verwenden ist. Insbesondere kann der Empfänger erkennen, welche Kodierungseinheit empfangen wurde und damit insbesondere im Fall einer fehlerhaften Übertragung eine gezielte Wiederholungssendung veranlassen. In dem Fall, daß der Empfänger keine Information über die Übertragung der ersten Kodierungseinheit hat, z.B. bei einer starken Störung, fordert er nach Nachfrage oder auch eigenständig die erste Kodierungseinheit an. Die Entscheidung, welche Kodierungseinheit gesendet werden soll, kann somit auf der Empfängerseite erfolgen. Vorteilhafterweise kann durch die gezielt anforderbaren Neusendungen bzw. Retransmissionen von Kodierungseinheiten bei gleichem Kodierungsgewinn die Gesamtanzahl der erforderlichen Übertragungen reduziert werden. Somit steigt die Datenrate im System. Insbesonders die Möglichkeit, dass der Empfänger explizit die erste, weniger stark kodierte Kodierungseinheit eines Datenpaketes anfordern kann, erhöht die Datenrate.

Wenn der Empfänger beim Sender eine bestimmte Kodierungseinheit anfordert, kann der Sender diese Kodierungseinheit vorteilhafterweise auch ohne das Mitsenden der Kodierungsinformation durchführen. Außerdem ist es denkbar, dass der Empfänger die Kodierungseinheiten eines Datenpaketes auch ohne explizite Identifikation durch den Sender voneinander unterscheiden kann, indem er die nicht decodierten Kodierungseinheiten miteinander vergleicht.

Die Anforderung der Kodierungseinheit in Verbindung mit einer positiven oder negativen Empfangsbestätigung vorzunehmen ermöglicht die Verwendung nur geringfügig anzupassender Formate und Einrichtungen des Kommunikationssystems.

Die Festlegung einer maximalen Anzahl von wiederholenden Übertragungsversuchen durch den Sender bietet ein einfaches Abbruchkriterium für den Versuch der Dekodierung oder die Neuanforderung von Kodierungseinheiten seitens des Empfängers. Dabei kann nach Erreichen der maximalen Anzahl von wiederholenden Übertragungsversuchen zumindest eine ausgewählte bisher empfangene Kodierungseinheit im Empfänger explizit erneut angefordert werden, so daß bei dauerhaften Fehlübertragungen einer bestimmten Kodierungseinheit durch die wiederholte oder zusätzliche Anforderung anderer Kodierungseinheiten eine Rekonstruktion der ursprünglichen Daten trotzdem noch möglich ist. Sinnvollerweise wird nach Erreichen der maximalen Anzahl von wiederholenden Übertragungsversuchen eine ausgewählte neu zu empfangene Kodierungseinheit im Empfänger kombiniert oder ersetzt. Sollte die Wiederholung schlechter sein als die vorhergehende Übertragung derselben Kodierungseinheit, so kann die wiederholt übertragene Kodierungseinheit im Empfänger verworfen werden. Es gibt außerdem die Möglichkeit, Wiederholungen zu kombinieren.

Wenn der Empfänger direkt aufeinanderfolgend eine vorbestimmbare Mehrzahl der Kodierungseinheiten vom Sender anfordert, kann die gesamte Übertragungszeit auf ein Minimum reduziert werden. Daraufhin die Dekodierung der Kodierungseinheiten einzuleiten, lässt nach einer zügigen Übertragung aller erforderlicher Daten in einem einzigen weiteren Verfahrensschritt erkennen, ob und wo Übertragungsfehler vorliegen. Dies ermöglicht eine anschließende gezielte Anforderung neuer, zuvor fehlerhaft empfangener Kodierungseinheiten, die wiederum zügig durchführbar ist.

Insbesondere können nun allgemein beliebige Abstände zwischen den Übertragungen einzelner Kodierungseinheiten liegen. Das Verfahren bietet die Möglichkeit, auch bei nicht synchroner Übertragung zu gewährleisten, dass die Empfängerseite informiert ist, was für eine Kodierungseinheit sie empfangen hat. Die Empfängerseite ist insbesondere auch in der Lage, bestimmte Kodierungseinheiten explizit nachzufordern. Der Empfänger kann jederzeit ohne zusätzlichen Signalisierungsaufwand die bereits empfangenen Kodierungseinheiten verwerfen und mit dem Dekodierungsverfahren von vorne anfangen.

Ein Ausführungsbeispiel wird nachfolgend anhand der Zeichnung näher erläutert. Es zeigen:
- Fig. 1: ein Ablaufdiagramm für die bekannte Versendung von Kodierungseinheiten und entsprechenden Empfangsbestätigungen;
- Fig. 2: schematisch einen Aufbau eines beispielhaften bekannten Funk-Kommunikationssystems;
- Fig. 3: ein Ablaufdiagramm für die Versendung von Kodierungseinheiten zusammen mit einer Information über den entsprechenden Kode;
- Fig. 4: ein alternatives Ablaufdiagramm für die Versendung von Kodierungseinheiten zusammen mit einer Information über den entsprechenden Kode und
- Fig. 5: ein weiters Ablaufdiagramm für die Versendung von Kodierungseinheiten, bei dem der Empfänger bestimmte Kodierungseinheiten anfordert.

Das in Fig. 2 dargestellte Kommunikationssystem zeigt ein Funk-Kommunikationsnetz mit Einrichtungen, die einen Paketdatendienst GPRS ermöglichen. Als Beispiel für eine stationäre oder mobile Kommunikationsendeinrichtung ist eine mobile Station MS eines mobilen Teilnehmers dargestellt, die über eine Luftschnittstelle V mit Einrichtungen eines terrestrischen UMTS-Funknetzes UTRAN (UMTS terrestrial radio access network) bzw. dessen Basisstationssystems BSS mit ortsfesten Basisstationen BS und Basisstationssteuerungen, drahtlos gekoppelt ist. Die Verbindung zu einem paketorientierten Kommunikationsnetz GPRS-N erfolgt seitens des UMTS-Funknetz UTRAN über eine Mobilvermittlungszentrale MSC. Zur Übertragung von Paketdaten zwischen der mobilen Station MS und einem Paketdatennetz PDN weist das Kommunikationsnetz GPRS-N für sich bekannte Einrichtungen auf.

Die Erläuterung des ersten beispielhaften Verfahrens zum Übertragen von kodierten Übertragungseinheiten, insbesondere zum Kennzeichnen von Kodierungsverfahren für individuelle Übertragungseinheiten bei nachträglicher Redundanzerhöhung erfolgt nun anhand der Darstellung der Fig. 3.

Der Sender sendet dem Empfänger beim Senden eines zu übertragenden Datenpakets SN410 nicht nur dessen Identifikationsnummer SN#10 sondern zusätzlich auch eine Information CWi, die angibt, welcher Kode CWi bei der Bereitstellung des Datenpakets SN#10 verwendet wurde.

Mit anderen Worten soll in jedem zu übertragenden Informationspaket und/oder Datenpaket eine Information übermittelt werden, welche den Empfänger darüber informiert, welcher Redundanzteil gerade übertragen wird. Dadurch können beliebige Abstände zwischen den Übertragungen liegen.

Vorteilhafterweise wird die Information CWi über die Redundanz an einer bereits vorhandene Sequenznummer oder an einen Header angefügt. Diese Übertragung der Information CWi über die Redundanz kann dann zusammen mit den Daten SN#10 erfolgen.

Jedoch ist alternativ oder zusätzlich auch eine getrennte Ü-bertragung von den Daten SN#10 und der Redundanzinformation CWi. Hier können zum Beispiel getrennte physikalische Kanäle benutzt werden. Dann muss diese Redundanzinformation CWi später beim Dekodieren oder Zusammensetzen der Datenblöcke mit den Daten und eventuell auch mit dem Kopfabschnitt des Datenblocks verbunden werden. Die Kodierung für die Information über den Redundanzteil, wird natürlich entsprechend des erwarteten Gesamtkodierungsgewinnes der Daten gewählt.

Im Empfänger oder einer diesem zugeordneten Einrichtung erfolgt die Zusammensetzung empfangener kodierter Daten unter Berücksichtigung von deren Redundanzstufe. Diese ist nun durch die Übertragung der Information CWi über die Redundanz verfügbar.

Der Empfänger kann wie bisher mitteilen, ob der zuletzt empfangende Datenblock richtig empfangen wurde bzw. die Daten fehlerfrei rekonstruierbar sind. Nun kann der Sender entscheiden, welche Redundanzstufe er wiederholt, sofern eine Wiederholung erforderlich ist.

Hat der Empfänger nicht alle erforderlichen Daten empfangen kann er dem Sender auch direkt oder zu einem späteren Zeitpunkt im Rahmen einer Retransmissions-Anforderung mitteilen, welche Redundanzstufe er bei der nächsten Übertragung gesendet haben möchte.

Fig. 3 stellt im wesentlichen den Ablauf des anhand der Fig. 1 beschriebenen Übertragungsablaufs dar. Nach einer ersten fehlerhaften Übertragung der 1. Kodierungseinheit SN#10, CW1 sendet der Empfänger, hier z.B. eine Basisstation BS, eine negative Empfangsbestätigung SN#10,NACK zum Sender, hier z.B. einer mobilen Station MS, zurück. Die beispielhafte Übertragung der 2. Kodierungseinheit SN10#,CW2 geht wiederum verloren. Der Empfänger fordert durch erneutes Übermitteln der negativen Empfangsbestätigung SN#10,NACK vom Sender eine erneute Übertragung der Daten SN#10 an. Sendet der Sender nun wiederum die 3. Kodierungseinheit SN#10,CW3 des Datenpakets SN#10 an den Empfänger, so erkennt der Empfänger an der mitgesendeten Information CW3 zur Redundanzstufe der gesendeten Daten, dass für die Rekonstruierung der ursprünglichen Daten SN#10 nicht die 1. und die 2. sondern nun die 1. und die 3. Kodierungseinheit zur Verfügung stehen. Dadurch ist eine korrekte Rekonstruierung der ursprünglich zu sendenden Daten SN#10 möglich.

Der Empfänger hingegen erkennt somit insbesondere auch, ob z.B. die 2. Kodierungseinheit mit einer Verzögerung geschickt bzw. empfangen wurde oder aufgrund der letzten Negativ-Quittierung (NACK) die 3. Kodierungseinheit gesandt wurde.

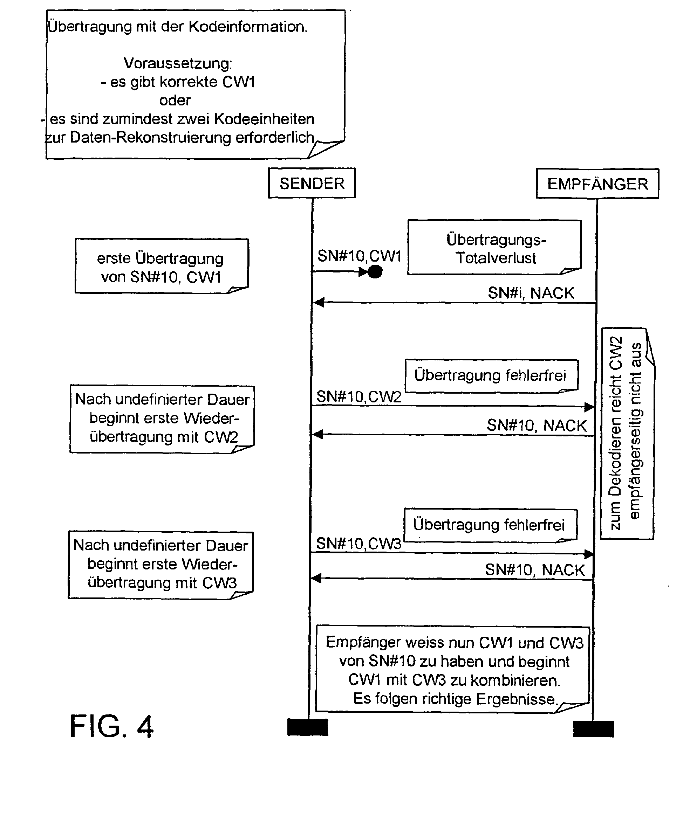

Fig. 4 stellt den Ablauf eines anderen Ausführungsbeispiels für einen Übertragungsablauf dar. Nach einer ersten Übertragung der 1. Kodierungseinheit SN#10, CW1, die so fehlerhaft ist, dass sie von dem Empfänger nicht erkannt wird, sendet der Empfänger eigenständig oder nach Aufforderung vom Sender, nach einer vorbestimmten oder nicht vorbestimmbaren Zeit eine als negativ interpretierbare Empfangsbestätigung SN#i,NACK zum Sender.

Das Auslösen dieser Empfangsbestätigung kann nach allgemein bekannten Verfahren hervorgerufen werden, z.B. Versenden einer Liste für mehrere Kodierungseinheiten, regelmäßiges Aussenden, Timeout-Verfahren oder durch Rückschlüsse von erfolgreichen Übertragungen. Der Sender sendet daraufhin die 2. Kodierungseinheit SN10#,CW2 der Paketdateneinheit SN#10. Diese wird vom Empfänger vollständig empfangen. Jedoch enthält die 2. Kodierungseinheit SN10#,CW2 aufgrund des Kodierungsverfahrens nicht alle Daten der ursprünglich zu versendenden Daten SN#10, so dass deren vollständige Rekonstruierung nicht möglich ist. Der Empfänger erkennt dies an der mitgesendeten Information CW2 zur 2. Redundanzstufe der gesendeten Daten und fordert daher durch erneutes Übermitteln der negativen Empfangsbestätigung SN#10,NACK vom Sender eine weitere Übertragung der Daten SN#10 an. Der Sender sendet nun die 3. Kodierungseinheit SN#10,CW3 des Datenpakets SN#10 fehlerfrei an den Empfänger. Beim vorliegenden Beispiel erkennt der Empfänger an der mitgesendeten Information CW3 zur 3. Redundanzstufe der gesendeten Daten SN#10, dass für die Rekonstruierung der ursprünglichen Daten SN#10 nun die 1. und die 3. Kodierungseinheit zur Verfügung stehen. Im vorliegenden Fall ist damit bereits eine korrekte Rekonstruierung der ursprünglich zu sendenden Daten SN#10 möglich, so dass der Empfänger daraufhin eine positive Empfangsbestätigung ACK an den Sender zurücksendet und mit der Datenrekonstruktion beginnt.

Vorteilhafterweise besteht nach der Übertragung aller Kodierungseinheiten die Möglichkeit, bereits gesendete Kodierungseinheiten neu zu schicken und eine solche wiederholt gesendete Kodierungseinheit mit der entsprechenden bereits zuvor empfangenen Kodierungseinheit zu verknüpfen. Die Verknüpfung kann dabei z. B. durch maximum ratio combining erfolgen. Dabei muss entschieden werden, welche Kodierungseinheit als erstes neu geschickt werden soll.

Eine Möglichkeit für den Sender, zu erkennen, dass eine erneute Übertragung erforderlich ist, besteht darin, dass Messwerte, wie z.B. der Signalrauschabstand der vom Empfänger empfangenen Kodierungseinheiten, an den Sender übertragen werden. Der Sender kann auch Listen mit den Empfangsbestätigungen des Empfängers anlegen, und diese dann auswerten. Der Sender kann dann entscheiden, welche Kodierungseinheit er neu verschickt.

In besonders vorteilhafter Art und Weise kann die Entscheidung, welche der Kodierungseinheiten wiederholt gesendet werden soll, auf der Empfängerseite erfolgen. Dazu fordert der Empfänger statt einer reinen negativen Empfangsbestätigung bzw. Empfangsmitteilung NACK explizit die gewünschte Kodierungseinheit an. Dies ist dem Empfänger aufgrund der Kenntnis der mitgesendeten Information CWi zur i-ten Redundanzstufe der gesendeten Daten SN#10 bereits empfangener Kodierungseinheiten möglich.

Insbesondere ist die Anforderung einer bestimmten Kodierungseinheit durch die Einführung einer Retransmissions-Aufforderung mit einem entsprechenden Signalisierungsformat vom Empfänger an den Sender möglich. Im Fall von drei Kodierungsstufen kann beispielsweise ein digitales Signalisierungsformat mit zwei Bit verwendet werden, bei dem der Empfänger nach dem Empfang einer neuen i-ten Kodierungseinheit eines Datenpaketes SN#10 bei der Empfangsquittierung NACK eines der folgenden Bitmuster mitsendet:
00, wenn mit Hilfe der bisher gesendeten Kodierungseinheiten das Datenpaket erfolgreich detektiert wurde;
01, wenn der Transmitter die 1. Kodierungseinheit (zum ersten oder wiederholten Male) schicken soll. Sollte eine Empfangsbestätigung verwendet werden, in der ein Wert eingetragen werden soll oder kann, obwohl noch keine Übertragung stattgefunden hat oder geplant ist, so kann der Wert 01 als Default übertragen werden.;
10, wenn der Transmitter die 2. Kodierungseinheit (zum ersten oder wiederholten Male) schicken soll;
11, wenn der Transmitter die 3. Kodierungseinheit (zum ersten oder wiederholten Male) schicken soll.

Bei einigen Kodierungsverfahren mit ansteigender Kodierungsstufe, kann es z.B. passieren, dass durch eine Störung, hervorgerufen durch Fehlinterpretation der Sequenznummer oder anderer Signalisierungsdaten Redundanzblöcke kombiniert werden, welche nicht zusammengehören. Hieraus folgt im allgemeinen, dass ein solcher Datenblock nicht wieder rekonstruiert werden kann.

In besonders vorteilhafter Weise kann dafür eine maximale Retransmissionsanzahl bzw. maximale Anzahl von Übertragungsversuchen festgelegt werden. Die Festlegung kann auch abhängig vom z.B. Ort des Empfängers oder der Empfangszeit festgelegt werden. Wird diese Anzahl überschritten, so werden ausgewählte oder alle der bisher empfangenen Kodierungseinheiten im Empfänger explizit erneut angefordert und vorteilhafterweise zuvor gelöscht. Davon braucht der Sender nicht unbedingt in Kenntnis gesetzt werden, da es vom Verfahrensablauf her vorteilhafterweise nur den Empfänger betrifft. Der Empfänger teilt lediglich mit, dass er z.B. die 1. Kodierungseinheit erneut geschickt haben möchte. Der Empfänger kann insbesondere dadurch jederzeit ohne zusätzlichen Signalisierungsaufwand die bereits empfangenen Kodierungseinheiten verwerfen und mit dem Dekodierungsverfahren von vorne anfangen.

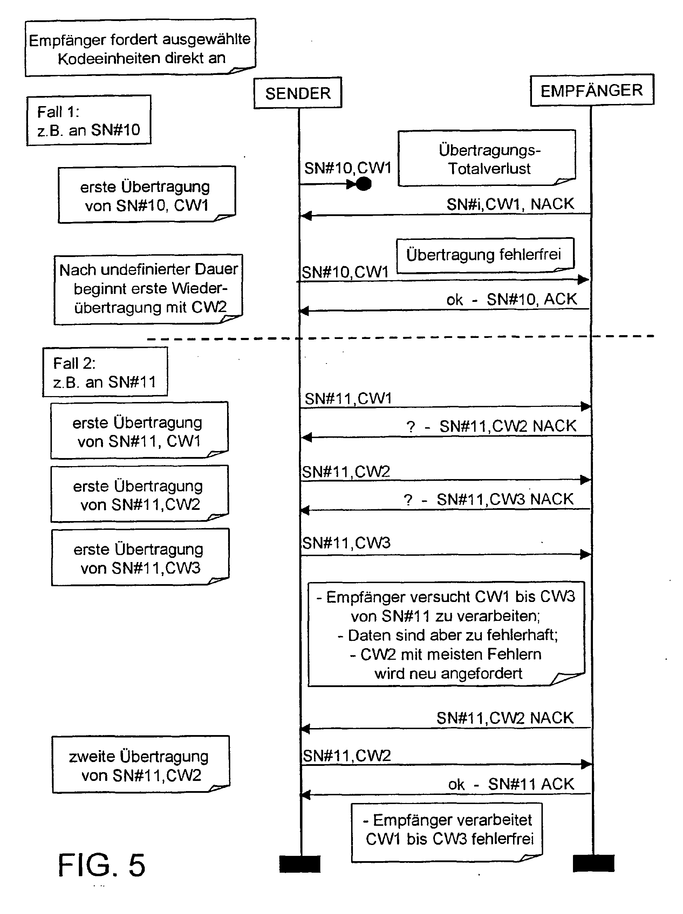

Fig. 5 stellt den Ablauf eines besonders bevorzugten Ausführungsbeispiels für einen Übertragungsablauf dar, bei dem der Empfänger ausgewählte Kodierungseinheiten anfordern kann.

Nach einer ersten Übertragung der 1. Kodierungseinheit SN#10, CW1, die so fehlerhaft ist, dass von dem Empfänger nicht einmal die Identifizierungsnummer SN#10 der Paketdateneinheit SN#10 erkannt wurde, sendet der Empfänger eine negative Empfangsbestätigung SN#i,CW1,NACK zum Sender. Das Auslösen dieser negativen Empfangsbestätigung kann nach allgemein bekannten Verfahren hervorgerufen werden, z.B. Versenden einer Liste für mehrere Kodierungseinheiten, regelmäßiges Aussenden, Timeout-Verfahren oder durch Rückschlüsse von erfolgreichen Übertragungen. Der Sender sendet daraufhin erneut die 1. Kodierungseinheit SN10#,CW1 der Paketdateneinheit SN#10. Diese wird vom Empfänger vollständig empfangen.

Als nächstes sendet der Sender gemäß einer weiteren Ausführungsform die 1. Kodierungseinheit SN11#,CW1 einer Paketdateneinheit SN#11. Der Empfänger fordert daraufhin zusammen mit einer positiven oder negativen Empfangsbestätigung ACK bzw. NACK direkt erst die Übertragung der 2. Kodierungseinheit SN#11,CW2 und daraufhin die Übertragung der 3. Kodierungseinheit SN#11,CW3 an. Nach dem Empfang der drei Kodierungseinheiten leitet der Empfänger die Dekodierung der Daten ein. Stellt er fest, dass die empfangenen Daten fehlerhaft sind, so kann er gezielt die Übertragung einer oder mehrerer der Kodierungseinheiten neu anfordern. Beim Beispiel der Fig. 5 wird erkannt, dass die 2. Kodierungseinheit am fehlerhaftesten empfangen wurde. Entsprechend wird die Neuübertragung der 2. Kodierungseinheit angefordert. Ist mit dieser die Rekonstruktion der ursprünglichen Daten möglich, so sendet der Empfänger eine positive Empfangsbestätigung an den Sender zurück.

## Patentansprüche

1. Verfahren zum Übertragen von Datenpaketen (SN#10, SN#11) in einem Funk-Kommunikationssystem (UMTS, GPRS) zwischen einem Sender (BS; MS) und einem Empfänger (MS; BS), bei dem
- zumindestens ein Teil der zu versendenden Datenpakete jeweils mit verschiedenen Kodes zu mehreren verschiedenen Kodierungseinheiten (CW1, CW2, CW3) kodiert wird,
- die verschiedenen Kodierungseinheiten (CW1, CW2, CW3) wenigstens eines Teils dieser Datenpakete für eine empfängerseitigen Rekonstruierung der Datenpakete vom Sender übertragen werden,
**dadurch gekennzeichnet, dass**
der Empfänger (MS; BS) vom Sender (BS; MS) durch eine entsprechende explizite Signalisierung eine bestimmte der Kodierungseinheiten (CW1, CW2, CW3) eines bestimmten der Datenpakete anfordert.

2. Verfahren nach Anspruch 1, bei dem
vom Sender sowohl eine zu den Kodierungseinheiten zugehörige Information über das zugrundeliegende Datenpaket (SN#10, SN#11) als auch eine zu den Kodierungseinheiten zugehörige Information über den entsprechenden, zu ihrer Kodierung verwendeten Kode (CW1, Cw2, CW3) zum Empfänger (MS; BS) übertragen wird.

3. Verfahren nach Anspruch 1 oder 2, bei dem
die bestimmte, vom Empfänger angeforderte Kodierungseinheit (CW1, CW2, CW3) bereits zuvor vom Sender übertragen wurde, und ohne Erfolg versucht wurde, diese empfangene Kodierungseinheit zu decodieren.

4. Verfahren nach einem der vorstehenden Ansprüche, bei dem die Anforderung der Kodierungseinheit (CW1, CW2, CW3) durch den Empfänger in Verbindung mit einer positiv oder negativ interpretierbaren Empfangsbestätigung (ACK bzw. NACK) erfolgt, die vom Empfänger (MS; BS) an den Sender (BS; MS) übermittelt wird.

5. Verfahren nach einem der vorstehenden Ansprüche, bei dem die Anforderung der Kodierungseinheit (CW1, CW2, CW3) in Form eines digitalen Bitmusters erfolgt, insbesondere in Form eines digitalen Bitmusters mit zwei Signalisierungsbits bei einer dreistufigen Kodierung.

6. Verfahren nach einem der vorstehenden Ansprüche, bei dem eine maximale Anzahl von durch den Sender wiederholenden Übertragungsversuchen für die Kodierungseinheiten festgelegt wird.

7. Verfahren nach Anspruch 6, bei dem
nach Erreichen der maximalen Anzahl von wiederholenden Obertragungsversuchen eine ausgewählte, zuvor empfangene Kodierungseinheit vom Empfänger (MS; BS) explizit erneut angefordert wird.

8. Funk-Kommunikationssystem zum Übertragen von Datenpaketen (SN#10, SN#11) zwischen einem Sender (BS; MS) und einem Empfänger (MS; BS)
- mit einer Kodierungseinrichtung im Sender (BS; MS) zum Kodieren eines zu versencienden Datenpaketes mit verschiedenen Kodes zu verschiedenen Kodierungseinheiten (CW1, CW2, CW3), die zur empfängerseitigen Rekonstruierung des versandten Datenpaketes vorgesehen sind,
- mit einer Dekodierungseinrichtung im Empfänger (MS; BS) zum Dekodieren der empfangenen Kodierungseinheiten (CW1, CW2, CW3),
**dadurch gekennzeichnet, dass**
dessen Empfänger eine Anforderungseinrichtung zum Anfordern einer Übertragung einer bestimmten vom Empfänger ausgewählten Kodierungseinheit (CW1, CW2, CW3) mittels einer expliziten Signalisierung aufweist.

## Claims

1. Method for transmitting data packets (SN#10, SN#11) in a radio communications system (UMTS, GPRS) between a transmitter (BS; MS) and a receiver (MS; BS), in which
- at least some of the data packets to be transmitted are each coded using different codes for a number of different coding units (CW1, CW2, CW3),
- the various coding units (CW1, CW2, CW3) of at least some of these data packets are transmitted by the transmitter for receiver-end reconstruction of the data packets,
**characterized in that**
the receiver (MS; BS) requests from the transmitter (BS; MS) a specific one of the coding units (CW1, CW2, CW3) of a specific one of the data packets by appropriate explicit signalling.

2. Method according to Claim 1, in which
the transmitter transmits both information, which is associated with the coding units, about the basic data packet (SN#10, SN#11) as well as information, which is associated with the coding units, about the corresponding code (CW1, CW2, CW3), which is used to code it, to the receiver (MS; BS).

3. Method according to Claim 1 or 2, in which
the specific coding unit (CW1, CW2, CW3) which is requested by the receiver has already previously been transmitted by the transmitter and an unsuccessful attempt has been made to decode this received coding unit.

4. Method according to one of the preceding claims, in which the request for the coding unit (CW1, CW2, CW3) by the receiver is made in conjunction with a reception acknowledgement (ACK or NACK) which can be interpreted positively or negatively, respectively, and which is transmitted by the receiver (MS; BS) to the transmitter (BS; MS).

5. Method according to one of the preceding claims, in which the request for the coding unit (CW1, CW2, CW3) is made in the form of a digital bit pattern, in particular in the form of a digital bit pattern with two signalling bits for three-stage coding.

6. Method according to one of the preceding claims, in which a maximum number of transmission attempts, which are repeated by the transmitter, is defined for the coding units.

7. Method according to Claim 6, in which
after reaching the maximum number of repeated transmission attempts, a selected previously received coding unit is explicitly requested once again by the receiver (MS; BS).

8. Radio communications system for transmitting data packets (SN#10, SN#11) between a transmitter (BS; MS) and a receiver (MS; BS),
- having a coding device in the transmitter (BS; MS) for coding a data packet which is to be transmitted using different codes for different coding units (CW1, CW2, CW3), which are intended for receiver-end reconstruction of the transmitted data packet,
- having a decoding device in the receiver (MS; BS) for decoding the received coding units (CW1, CW2, CW3),
**characterized in that**
its receiver has a request device for requesting transmission of a specific coding unit (CW1, CW2, CW3), which is selected by the receiver, by means of explicit signalling.

## Revendications

1. Procédé de transmission de paquets de données (SN#10, SN#11) dans un système de radiocommunication (UMTS, GPRS) entre un émetteur (BS, MS) et un récepteur (MS, BS), dans lequel
- au moins une partie des paquets de données à envoyer sont respectivement codés avec différents codes pour obtenir plusieurs unités de codage différentes (CW1, CW2, CW3),
- les différentes unités de codage (CW1, CW2, CW3) d'au moins une partie de ces paquets de données sont transmis par l'émetteur pour une reconstruction des paquets de données côté récepteur,
**caractérisé en ce que** le récepteur (MS; BS) demande à l'émetteur (BS; MS) l'une déterminée des unités de codage (CW1, CW2, CW3) de l'un déterminé des paquets de données par une signalisation explicite correspondante.

2. Procédé selon la revendication 1, dans lequel l'émetteur transmet au récepteur (MS; BS) non seulement une information associée aux unités de codage, concernant le paquet de données sous-jacent (SN#10, SN#11), mais aussi une information associée aux unités de codage, concernant le code correspondant utilisé pour leur codage (CW1, CW2, CW3).

3. Procédé selon la revendication 1 ou 2, dans lequel l'unité de codage déterminée demandée par le récepteur (CW1, CW2, CW3) a déjà été transmise préalablement par l'émetteur et il a été essayé sans succès de décoder cette unité de codage reçue.

4. Procédé selon l'une des revendications précédentes, dans lequel la demande ayant pour objet l'unité de codage (CW1, CW2, CW3) est effectuée par le récepteur en combinaison avec un accusé de réception positif ou négatif interprétable (ACK resp. NACK), lequel est transmis du récepteur (MS; BS) à l'émetteur (BS; MS).

5. Procédé selon l'une des revendications précédentes, dans lequel la demande ayant pour objet l'unité de codage (CW1, CW2, CW3) se fait sous la forme d'une séquence binaire numérique, en particulier sous la forme d'une séquence binaire numérique avec deux bits de signalisation dans le cas d'un codage à trois niveaux.

6. Procédé selon l'une des revendications précédentes, dans lequel est déterminé, pour les unités de codage, un nombre maximal de tentatives de transmission répétés par l'émetteur.

7. Procédé selon la revendication 6, dans lequel, après l'obtention du nombre maximal de tentatives de transmission répétés, une unité de codage sélectionnée, préalablement reçue, est de nouveau demandée explicitement par le récepteur (MS; BS).

8. Système de radiocommunication pour la transmission de paquets de données (SN#10, SN#11) entre un émetteur (BS; MS) et un récepteur (MS; BS), comprenant
- un équipement de codage dans l'émetteur (BS; MS) pour coder un paquet de données à envoyer avec différents codes pour obtenir différentes unités de codage (CW1, CW2, CW3), lesquelles sont prévues pour la reconstruction, côté récepteur, du paquet de données envoyé,
- un équipement de décodage dans le récepteur (MS; BS) pour décoder les unités de codage reçues (CW1, CW2, CW3),
**caractérisé en ce que**
son récepteur comporte un équipement de demande pour demander, au moyen d'une signalisation explicite, une transmission d'une unité de codage (CW1, CW2, CW3) déterminée sélectionnée par le récepteur.
